(19) Europäisches Patentamt
European Patent Office
Office européen des brevets

(11) EP 3 898 504 B1

(12) EUROPÄISCHE PATENTSCHRIFT

(45) Veröffentlichungstag und Bekanntmachung des Hinweises auf die Patenterteilung:
**26.07.2023 Patentblatt 2023/30**

(21) Anmeldenummer: **19829186.6**

(22) Anmeldetag: **19.12.2019**

(51) Internationale Patentklassifikation (IPC):
***C01B 3/24*** (2006.01) ***C01B 32/40*** (2017.01)
***C10J 3/46*** (2006.01)

(52) Gemeinsame Patentklassifikation (CPC):
**C01B 3/24; C01B 32/40; C10J 3/463; C10J 3/58; C10J 3/726;** C01B 2203/0266; C01B 2203/0822; C01B 2203/1241; C10J 2300/0943; C10J 2300/0959; C10J 2300/0966; C10J 2300/0989; C10J 2300/1215; C10J 2300/1609; C10J 2300/183; (Forts.)

(86) Internationale Anmeldenummer:
**PCT/EP2019/086469**

(87) Internationale Veröffentlichungsnummer:
**WO 2020/127838 (25.06.2020 Gazette 2020/26)**

(54) **VERFAHREN ZUR HERSTELLUNG VON WASSERSTOFF, KOHLENMONOXID UND EINEM KOHLENSTOFFHALTIGEN PRODUKT**

PROCESS FOR PRODUCING HYDROGEN, CARBON MONOXIDE AND A CARBON -CONTAINING PRODUCT

PROCÉDÉ DE FABRICATION D'HYDROGÈNE, DE MONOXYDE DE CARBONE ET D'UN PRODUIT CONTENANT DU CARBONE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **20.12.2018 DE 102018222463**

(43) Veröffentlichungstag der Anmeldung:
**27.10.2021 Patentblatt 2021/43**

(73) Patentinhaber:
- **thyssenkrupp Industrial Solutions AG
45143 Essen (DE)**
- **thyssenkrupp AG
45143 Essen (DE)**
- **BASF SE
67056 Ludwigshafen am Rhein (DE)**

(72) Erfinder:
- **ANTWEILER, Nicolai
45147 Essen (DE)**
- **BÜKER, Karsten
44139 Dortmund (DE)**

(74) Vertreter: **Kutzenberger Wolff & Partner
Waidmarkt 11
50676 Köln (DE)**

(56) Entgegenhaltungen:
**US-A- 2 911 293 US-A- 4 025 612
US-A1- 2015 336 795**

- **ABBAS H F ET AL: "Hydrogen production by methane decomposition: A review", INTERNATIONAL JOURNAL OF HYDROGEN ENERGY, ELSEVIER SCIENCE PUBLISHERS B.V., BARKING, GB, Bd. 35, Nr. 3, 1. Februar 2010 (2010-02-01), Seiten 1160-1190, XP026874341, ISSN: 0360-3199 [gefunden am 2009-11-27]**

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).



**(Forts. nächste Seite)**

(52) Gemeinsame Patentklassifikation (CPC): (Forts.)
C10J 2300/1846; Y02P 20/10

## Beschreibung

Die Erfindung betrifft ein Verfahren zur Herstellung von Wasserstoff, Kohlenmonoxid und einem kohlenstoffhaltigen Produkt in mindestens einer Reaktionsvorrichtung, wobei abwechselnd während der Aufheizphase Wasserstoff und Kohlenmonoxid hergestellt werden und während der Abkühlphase Kohlenstoff und Wasserstoff und der Gesamtprozess zyklisch und kontinuierlich wiederholt werden kann, eine Vorrichtung zur Durchführung des Verfahrens sowie die Verwendung des kohlenstoffhaltigen Produkts.

Wesentliche Bereiche der Weltwirtschaft basieren auf Erdöl als Rohstoff- oder Energiequelle. So werden z.B. Otto- und Dieselkraftstoffe für den Individual- und Güterverkehr, schweres Heizöl für den Schiffsverkehr und als Brennstoff für Stromkraftwerke sowie leichtes Heizöl für die Beheizung von Wohnhäusern aus Erdöl gewonnen. Aber auch viele Rohstoffe der chemischen Industrie stammen direkt oder indirekt aus dem Erdöl. Erdöl trägt aber auch erheblich zur Umweltbelastung durch die Freisetzung von Kohlenstoffdioxid, Methan und Distickstoffoxid bei.

Der Ausstoß von Kohlenstoffdioxid in die Erdatmosphäre ist vor allem durch die Verbrennung fossiler Energieträger (durch die Industrie, die Stromerzeugung, das Heizen und den Verkehr) seit Beginn der Industrialisierung sehr stark angestiegen. Dabei wirkt das Kohlenstoffdioxid in der Atmosphäre als Treibhausgas und steht im direkten Zusammenhang mit naturverändernden Phänomenen, wie zum Beispiel mit der globalen Erderwärmung (Treibhauseffekt).

In der Erdatmosphäre liegt Kohlenstoffdioxid zu etwa 0,04 % vor und hat einen Anteil von 9 bis 26 % am natürlichen Treibhauseffekt. Die geogene, d.h. natürliche $CO_2$-Emission beträgt etwa 550 Gt pro Jahr. Dieser steht jedoch ein etwa gleich hoher natürlicher Verbrauch, insbesondere durch Photosynthese, aber auch durch Bindung in kalkbildenden Organismen gegenüber. Der weltweite anthropogene Kohlenstoffdioxidausstoß betrug im Jahr 2014 knapp 36 Gt und machte etwa 60 % des vom Menschen verursachten zusätzlichen Treibhauseffekts aus. Der aktuelle globale $CO_2$-Trend zeigt, dass der jährliche $CO_2$-Emissionszuwachs (ca. 400 bis 800 Mio.t) unvermindert anhält. Darüber hinaus haben die Emissionen die Konzentration des Kohlenstoffdioxids in der Erdatmosphäre seit Beginn der Industrialisierung von 280 ppm auf 400 ppm (Stand 2015) ansteigen lassen.

Um den Schadstoffausstoß zu senken und der damit verbundenen Klimakatastrophe entgegenzuarbeiten, haben sich die Mitglieder der UNO im Kyoto-Protokoll, dessen Ziel der Klimaschutz ist, erstmals auf völkerrechtlich verbindliche Zielwerte für den Ausstoß von Treibhausgasen in den Industrieländern festgelegt. Es sah innerhalb einer sogenannten ersten Verpflichtungsperiode (2008 bis 2012) vor, den jährlichen Treibhausgasausstoß der Industrieländer um durchschnittlich 5,2 % gegenüber dem Stand von 1990 zu reduzieren. Für eine zweite Verpflichtungsperiode einigte man sich auf eine Verlängerung des Kyoto-Protokolls bis 2020.

In Deutschland konnte die Kohlenstoffdioxidemission von 1990 bis 2004 um 17,2 % gesenkt werden. Weiterhin konnte die EU ihre Emissionen in der ersten Verpflichtungsperiode des Kyoto-Protokolls erheblich senken. Ende des Jahres 2012 wurden etwa 18 % weniger Treibhausgase im Vergleich zu 1990 ausgestoßen. Damit wurde das Ziel der EU, die Emissionen um 8 % zu senken, deutlich übertroffen.

Dennoch gilt weiterhin das Ziel, die Kohlenstoffdioxidemissionen zu senken. Dieses Ziel lässt sich aber nicht nur allein mit erneuerbaren Energien erreichen, sondern es besteht auch ein allgemeines Interesse an Prozessoptimierungen der bisher bekannten Verfahren.

Zusätzlich bedeutet der Kohlenstoffdioxidausstoß in die Atmosphäre nicht nur eine Belastung für die Umwelt, die Emission in die Umwelt bedeutet gleichzeitig auch einen Verlust an Kohlenstoff als Wertstoff.

Es werden derzeit erhebliche Anstrengungen unternommen, Erdölprodukte durch andere Rohstoffe oder alternative Verfahren zu ersetzen.

Seit über 100 Jahren ist Wasserstoff ein wichtiger Rohstoff der Chemieindustrie. Er wird z.B. als Brennstoff zur Erzeugung von Licht und Wärme, für die Ammoniaksynthese, die Herstellung von Methanol usw. benötigt. Insgesamt werden jährlich in Deutschland ungefähr 20 Mrd. $m^3$ Wasserstoff erzeugt, weltweit sind es etwa 500 Mrd. $m^3$. Dies entspricht sowohl bundesweit als auch weltweit einem Anteil von jeweils 1,5 % des Energiebedarfs. Es sind viele Methoden zur Wasserstoffherstellung bekannt. Diese umfassen zum Beispiel zum einen die Verwendung von fossilen Rohstoffen als Ausgangsprodukt (Dampfreformierung von Erdgas oder Naphta, partielle Oxidation von Schweröl, Benzinreformierung, Kohlevergasung usw.) und zum anderen die Elektrolyse, die lediglich Wasser und Strom benötigt. Alle Verfahren haben jedoch gemein, dass sie mehr oder weniger viel Energie benötigen. Das Marktvolumen für die Wasserstoffherstellung liegt bei 8,26 Milliarden Dollar mit einer Wachstumsrate von 5,6%. 1,5% des weltweiten Energiebedarfs wird direkt durch Wasserstoff gedeckt. Es wird auch zukünftig einen großen Bedarf an erschwinglichem Wasserstoff geben.

Wasserstoff ist ein wesentlicher Bestandteil des Synthesegases. Mit "Synthesegas" werden Gasmischungen bezeichnet, die im Wesentlichen aus Wasserstoff und Kohlenmonoxid bestehen, wobei auch Beimengungen von Kohlendioxid, Stickstoff, Edelgasen, Methan und anderen Kohlenwasserstoffen enthalten sein können. Synthesegas wird als Zwischenprodukt oder Ausgangsstoff für zahlreiche Syntheseprozesse verwendet, beispielsweise zur Herstellung von Methanol und anderen Alkoholen, Essigsäure, Dimethylether, synthetischen Kraftstoffen (FISCHER-TROPSCH-Synthese), synthetischem Erdgas (SNG), Ammoniak (HABER-BOSCH-Verfahren), sowie für Oxosynthesen. Die damit

erhältlichen Grundstoffe stellen wichtige Ausgangsstoffe bzw. Zwischenprodukte für die chemische Industrie dar, beispielsweise für die Herstellung von pharmazeutischen Wirkstoffen, Pflanzenschutzmitteln, Düngemitteln, Farben und Kunststoffen. Bei den meisten bekannten Technologien (z.B. Water-Shift-Reaktion) zur Erzeugung und Umwandlung von Synthesegas besteht jedoch das Problem, dass bei der Synthese der benötigten Menge an Wasserstoff eine größere Menge überschüssiges $CO_2$ erzeugt wird, das wiederum als klimaschädliches Gas in die Umwelt gelangt.

Bei den klassischen Verfahren zur Herstellung von Synthesegas, wie zum Beispiel bei der Dampfreformierung oder der Kohlevergasung, oder aber auch bedingt durch das Boudouard-Gleichgewicht entsteht neben dem Synthesegas auch Kohlenstoffdioxid. Darüber hinaus sind die dabei ablaufenden Reaktionen stark endotherm und benötigen daher von außen eine Energiezufuhr, womit diese Verfahren nicht wirtschaftlich sind.

Dampfreformierung ist das am weitesten verbreitete Verfahren zur Erzeugung von wasserstoffreichem Synthesegas aus leichten Kohlenwasserstoffen:

$$CH_4 + H_2O \rightleftharpoons CO + 3\,H_2,\ \Delta H = +206{,}2\ kJ/mol.$$

Das Kohlenmonoxid kann in der Wassergas-Shift-Reaktion mit weiterem Wasserdampf zu Kohlendioxid ($CO_2$) und Wasserstoff reagieren:

$$CO + H_2O \rightleftharpoons CO_2 + H_2,\ \Delta H = -41{,}2\ kJ/mol.$$

Synthesegas kann beispielsweise auch durch Kohlevergasung hergestellt werden. Für die Kohlevergasung mit Wasserdampf und Sauerstoff stellen die exotherme partielle Verbrennung von Kohlenstoff und die endotherme Wassergasbildung die eigentlichen Vergasungsreaktionen dar. Über die endotherme Reaktion:

$$C + H_2O \rightleftharpoons CO + H_2,\ \Delta H = +131 kJ / mol$$

entsteht aus Kohle, die zuvor durch Verbrennung an Luft aufgeheizt wurde, und Wasserdampf in einer Gleichgewichtsreaktion sogenanntes Wassergas, eine Mischung aus Kohlenmonoxid und Wasserstoff. Es handelt sich um eine Gleichgewichtsreaktion. Das Kohlenmonoxid kann auch hier in der Wassergas-Shift-Reaktion mit weiterem Wasserdampf zu Kohlendioxid ($CO_2$) und Wasserstoff reagieren:

$$CO + H_2O \rightleftharpoons CO_2 + H_2,\ \Delta H = -41{,}2\ kJ/mol.$$

Das Boudouard-Gleichgewicht beschreibt die Gleichgewichtsbeziehung zwischen Kohlenstoff, Kohlenmonoxid und Kohlendioxid:

$$C + CO_2 \rightleftharpoons 2\,CO,\ \Delta H = +162{,}5\ kJ/mol.$$

Die Lage des Boudouard-Gleichgewichts wird mit steigender Temperatur und fallendem Druck nach rechts verschoben. Bei Verbrennung von Kohlenstoff im Sauerstoffunterschuss erhält man deshalb < 400 °C praktisch reines $CO_2$, > 1000 °C nur CO.

Die Umsetzung von Synthesegas ($CO + H_2$) zu den verschiedensten Produkten erfordert auch unterschiedliche molare $H_2$/CO-Verhältnisses. Das gewünschte $H_2$/CO-Verhältnis kann mittels CO-Konvertierung oder $H_2$/CO-Trennung eingestellt werden. Zum Beispiel ist für die FISCHER-TROPSCH-Synthese ein molares $H_2$/CO-Verhältnis von zwei erforderlich. Synthesegase aus festen Brennstoffen erreichen diesen Wert im Allgemeinen nicht. Für die Kobalt-katalysierte FISCHER-TROPSCH-Synthese mit z.B. biomassestämmigem Synthesegas erfolgt derzeit die Einstellung des $H_2$/CO-Verhältnisses in einer vorgeschalteten CO-Konvertierungsstufe. Für die Oxosynthese zur Herstellung von Alkoholen oder Aldehyden aus Olefinen ist beispielsweise ein $H_2$/CO-Verhältnis von eins erforderlich.

Bis heute wird der von der chemischen Industrie benötigte Wasserstoff zu mehr als 90 Prozent durch die Dampfreformierung von fossilen Brennstoffen wie Erdgas und Erdöl gewonnen. Die Dampfreformierung ist eine industriell anwendbare Methode mit einem hohen Wirkungsgrad und am weitesten verbreitet. Nachteilig hierbei ist die große Menge an $CO_2$, die dabei freigesetzt wird. Deshalb wird derzeit an alternativen Herstellungsverfahren gearbeitet.

Durch die Pyrolyse von Kohlenwasserstoffen können Wasserstoff und Kohlenstoff hergestellt werden und gleichzeitig die Kohlenstoffdioxidentstehung und -emission geringer gehalten werden. Jedoch verläuft die Pyrolyse stark

endotherm und erfordert Reaktionstemperaturen von über 1000 °C.

Derzeit gibt es vermehrte Forschungsbestrebungen zur Herstellung von Wasserstoff unter gleichzeitiger Reduzierung der $CO_2$-Entstehung/Freisetzung.

Aus dem Stand der Technik sind mehrere Pyrolyseverfahren für die Herstellung von Wasserstoff und Kohlenstoff bekannt, die versuchen die erforderlichen hohen Temperaturen zu realisieren und den $CO_2$-Footprint möglichst gering zu halten.

Beispielsweise beschäftigt sich die US 2002/0007594 A1 mit einem Verfahren zur Herstellung von Wasserstoff und Kohlenstoff mittels einer thermokatalytischen Zersetzung (oder Dissoziation, Pyrolyse oder Cracken). Dabei werden kohlenstoffhaltige Brennstoffe über einen kohlenstoffbasierten Katalysator in Abwesenheit von Luft und/oder Wasser in einem Reaktor umgesetzt, wobei die für diese endotherme Reaktion benötigte thermische Energie durch das Verbrennen eines Brennstoffes in einem separaten Brenner zur Verfügung gestellt wird, die danach dem Reaktor zugeführt wird.

US 2007/0111051 A1 betrifft eine Vorrichtung, die geeignet ist für ein Verfahren wie es in US 2002/0007594 A1 beschrieben wird. Das heißt es geht um die Herstellung von Wasserstoff und Kohlenstoff mittels einer thermokatalytischen Zersetzung von Kohlenwasserstoffen über einen kohlenstoffbasierten Katalysator in einem Luft- und/oder wasserfreien Milieu. Auch hier erfolgt die Beheizung von außen, indem der Reaktor über eine in einem separaten Brenner stattfindende Reaktion aufgeheizt wird.

Ein Verfahren zur Herstellung von Wasserstoff mittels einer Pyrolyse von Kohlenwasserstoffen durch den Kontakt mit einem aufgeheizten feinpartikulären, kohlenstoffhaltigen Material mit einer äußeren Oberfläche von mindestens 1 $m^2/g$ wird in der US 5,650,132 beschrieben.

WO 2014/097142 A1 betrifft ein Verfahren zur parallelen Herstellung von Wasserstoff, Kohlenstoffmonoxid und einem kohlenstoffhaltigen Produkt, wobei ein oder mehrere Kohlenwasserstoffe thermisch zersetzt werden und zumindest ein Teil des entstehenden Pyrolysegases aus der Reaktionszone des Zersetzungsreaktors bei einer Temperatur von 800 bis 1400 °C abgezogen und mit Kohlenstoffdioxid zu einer kohlenstoffmonoxid- und wasserstoffhaltigen Gasmischung (Synthesegas) in einem Reverse Water-Gas Shift Reaktor umgesetzt wird. Die für die Durchführung des Verfahrens erforderliche Energie kann durch eine oxidative, z.B. mit der Verbrennung von Erdgas, eine solare, z.B. Hochtemperatursolarkraftwerke, oder elektrischen Energiequellen bereitgestellt werden.

In der WO 2013/004398 A2 wird ein Verfahren zur parallelen Herstellung von Wasserstoff und kohlenstoffhaltigen Produkten dargestellt, bei dem Kohlenwasserstoffe in einen Reaktionsraum (R) eingeleitet und in Gegenwart eines kohlenstoffhaltigen Granulats thermisch in Kohlenstoff und Wasserstoff zersetzt werden. Dabei wird wenigstens ein Teil der für die Kohlenwasserstoffzersetzung erforderlichen thermischen Energie über einen gasförmigen Wärmeträger in den Reaktionsraum (R) eingebracht, der außerhalb des Reaktionsraums (R) erzeugt wird. Im Sinne der vorliegenden Anmeldung entspricht die erfindungsgemäße "*Reaktionsvorrichtung*", wie z.B. Reaktionsvorrichtung (R0), dem Reaktionsraum (R) gemäß der WO 2013/004398 A2. Während gemäß der WO 2013/004398 A2 eine Erzeugung eines gasförmigen Wärmeträgers außerhalb des Reaktionsraums (R) stattfindet, d.h. nicht in Gegenwart des kohlenstoffhaltigen Granulats, ist erfindungsgemäß eine Erzeugung eines (gasförmigen) Wärmeträgers in Gegenwart eines Bettes aus kohlenstoffhaltigem Material vorgesehen.

US 4,240,805, US 2003/0235529, US 2007/003478 und US 2007/033873 offenbaren Verfahren zur Herstellung von Synthesegas bzw. wasserstoffhaltigen Gasströmen.

Obwohl die bekannten neueren Verfahren zur Herstellung von Wasserstoff, Kohlenmonoxid und/oder Kohlenstoff sich bemühen, die Mengen des bei der Herstellung chemischer Verbindungen produzierten Klimagases $CO_2$ zu reduzieren, sind sie nicht in jedem Punkt zufriedenstellend und es besteht Bedarf an verbesserten Verfahren und Vorrichtungen.

Der für die Kohlenwasserstoffpyrolyse erforderliche Energieeintrag in das Reaktorsystem ist eine der wesentlichen Herausforderungen. Beispielsweise ist eine elektrische Beheizung insbesondere bei Drücken bis 30 bar technisch anspruchsvoll, mit hohen Betriebskosten und einem hohen Wartungsaufwand verbunden. Bei Temperaturen zwischen 1400 °C und 1800 °C sind üblicherweise kostenintensive Keramiken, wie Zirkonoxid, erforderlich. Eine regenerative Beheizung durch Überführung von gespeicherter Energie, mittels eines Trägergasstromes, ist mit hohen Investitionskosten verbunden.

Es besteht weiterhin Bedarf, die Reaktionstemperaturen von größer 1000 °C, die die endotherme Pyrolyse von Kohlenwasserstoffen zu Wasserstoff erfordert, mittels Verfahren sicher zu stellen, die einerseits möglichst einfach und andererseits unter ökologischen und ökonomischen Gesichtspunkten vorteilhaft und sinnvoll sind. Insbesondere besteht dieser Bedarf an solchen Verfahren, die auch für die großtechnische Produktion geeignet sind.

Es ist daher Aufgabe der vorliegenden Erfindung, ein Verfahren zur Herstellung von Wasserstoff, Kohlenmonoxid und einem kohlenstoffhaltigen Produkt zur Verfügung zu stellen, welches die Nachteile des Standes der Technik nicht oder zumindest in verringerter Form aufweist.

Diese Aufgabe wird durch den Gegenstand der Beschreibung, der Patentansprüche und der Figuren gelöst.

Es wurde überraschend gefunden, dass unter Verwendung des erfindungsgemäßen Verfahrens Wasserstoff, Kohlenmonoxid und ein kohlenstoffhaltiges Produkt mit zufriedenstellenden Eigenschaften ohne die bisherigen Nachteile

erhalten werden können. So wird

- Synthesegas bei sehr geringem $CO_2$-Footprint hergestellt,
- ein kohlenstoffhaltiges Produkt als zusätzliches Wertprodukt erhalten,
- der Eintrag der Energie in das Reaktorsystem/Reaktionsvorrichtung wird deutlich verbessert,
- durch die neuartige Reaktionsvorrichtung, bei der die entstehende Wärme optimal und wieder direkt im Prozess genutzt wird, kann der benötigte externe Energieeintrag geringer gehalten werden als im Stand der Technik,
- der erforderliche Energie- und Kostenaufwand deutlich vermindert, und
- die Herstellung von Wasserstoff, Kohlenmonoxid und kohlenstoffhaltigem Produkt in einer vereinfachten Reaktionsvorrichtung möglich, die auch großtechnisch eingesetzt werden kann.

Ein Aspekt der Erfindung betrifft ein Verfahren zur Herstellung von Wasserstoff, Kohlenmonoxid und einem kohlenstoffhaltigen Produkt in mindestens einer Reaktionsvorrichtung, wobei die mindestens eine Reaktionsvorrichtung ein Bett aus kohlenstoffhaltigem Material umfasst und dadurch gekennzeichnet ist, dass

- das Bett aus kohlenstoffhaltigem Material in der mindestens einen Reaktionsvorrichtung abwechselnd auf eine Temperatur von > 800 °C aufgeheizt und spätestens bei Erreichen einer Temperatur von 1800 °C abgekühlt wird auf eine Temperatur von ≤ 900 °C,
- wobei während der Aufheizphase Wasserstoff und Kohlenmonoxid hergestellt werden und während der Abkühlphase Kohlenstoff und Wasserstoff.

In einer Ausführungsform umfasst das Verfahren folgende Schritte:

(a) Bereitstellen von Wasserstoff und Sauerstoff
(b) Aufheizen des Bettes aus kohlenstoffhaltigem Material auf eine Temperatur von > 800 °C durch die Umsetzung von Wasserstoff mit Sauerstoff
(c) Abziehen des entstehenden Wasserstoffs und Kohlenmonoxids
(d) Beendigung der Bereitstellung von Wasserstoff und Sauerstoff spätestens bei Erreichen einer Temperatur von 1800 °C des Bettes aus kohlenstoffhaltigem Material
(e) Bereitstellen eines gasförmigen Kohlenwasserstoffstromes und Zersetzung der Kohlenwasserstoffe in Gegenwart des Bettes aus kohlenstoffhaltigem Material in Kohlenstoff und Wasserstoff, wobei die Temperatur des Bettes aus kohlenstoffhaltigem Material abnimmt
(f) Abziehen des Wasserstoffs
(g) Beendigung der Bereitstellung eines gasförmigen Kohlenwasserstoffstromes spätestens bei Erreichen einer Temperatur von ≤ 900 °C des Bettes aus kohlenstoffhaltigem Material
(h) Abziehen zumindest eines Teils des kohlenstoffhaltigen Materials des Bettes, wobei das kohlenstoffhaltige Material einen Niederschlag aufweist, der das kohlenstoffhaltige Produkt umfasst

wobei Schritte (a) bis (h) in der mindestens einen Reaktionsvorrichtung durchgeführt werden.

Dabei umfasst die Reaktionsvorrichtung ein Bett aus kohlenstoffhaltigem Material, wobei kohlenstoffhaltiges Bett auch als Synonym verwendet werden kann. Unter kohlenstoffhaltigem Material ist ein Material zu verstehen, das aus festen Partikeln besteht. Vorteilhafterweise sind die Partikel kugelförmig ausgestaltet. In einer Ausführungsform weist das kohlenstoffhaltige Material mindestens 50 Gew.-%, bevorzugt mindestens 80 Gew.-%, weiter bevorzugt mindestens 90 Gew.-% Kohlenstoff, weiter bevorzugt mindestens 95 Gew.-%, insbesondere mindestens 98 Gew.-% Kohlenstoff auf. In einer besonders bevorzugten Ausführungsform besteht das kohlenstoffhaltige Material aus Kohlenstoff.

Grundsätzlich ist die Partikelgröße des kohlenstoffhaltigen Materials im Bett frei einstellbar, sie wird unter anderem bestimmt durch die beabsichtigte Verwertung des Kohlenstoffes. In einer Ausführungsform weisen die Partikel aus kohlenstoffhaltigem Material eine durchschnittliche Größe im Bereich von 0,05 bis 100 mm oder 0,05 bis 50 mm oder 0,1 bis 10 mm oder 1 bis 8 mm auf. In einer bevorzugten Ausführungsform weisen die Partikel aus kohlenstoffhaltigem Material eine durchschnittliche Größe im Bereich von 2 bis 4 mm, bevorzugt 2,2 bis 3,7 mm, besonders bevorzugt 2,5 bis 3,5 mm, ganz besonders bevorzugt 2,7 bis 3,2 mm auf. Dabei können die Partikel beispielsweise aus Aktivkohle, Kohle, Koks, Koksgrus oder aus Mischungen aus wenigstens zwei dieser Kohlenstoffsorten bestehen. In einer weiteren Ausführungsform des erfindungsgemäßen Verfahrens wird zumindest ein Teil des Pyrolysekohlenstoffs rezykliert, so dass die Partikel aus Pyrolysekohlenstoff bestehen oder diesen Pyrolysekohlenstoff enthalten, ggf. in einer Mischung mit einer oder mehreren der vorstehend genannten Kohlenstoffsorten.

Vorteilhafterweise handelt es sich bei dem Bett aus kohlenstoffhaltigem Material um ein Festbett.

Das erfindungsgemäße Verfahren erlaubt es, durch die zeitliche Trennung von Verbrennung und Pyrolyse (d.h. Zersetzung von Kohlenwasserstoff) und einen zyklischen Wechsel der Edukt-Feeds (Kohlenwasserstoff bzw. $H_2/O_2$)

alle Schritte in einer Reaktionsvorrichtung mittels des gleichen Betts aus kohlenstoffhaltigem Material durchzuführen und Synthesegas, Wasserstoff und Kohlenstoff herzustellen.

Die Ausgestaltung des erfindungsgemäßen Verfahrens sieht vor, dass die erforderliche Energie durch die Oxidation von Wasserstoff mittels Sauerstoffs erzeugt wird. Als sauerstoffhaltiges Oxidationsmittel kann Luft und/oder mit Sauerstoff angereicherte Luft und/oder technisch reiner Sauerstoff verwendet werden. Wasserstoff und das sauerstoffhaltige Oxidationsmittel werden gemischt und zur Reaktion gebracht. In einer bevorzugten Ausführungsform werden Wasserstoff und das sauerstoffhaltige Oxidationsmittel in die Reaktionsvorrichtung eingeleitet und verbrannt, vorzugsweise am Ende der Reaktionsvorrichtung an dem sie eingeleitet werden. In einer Ausführungsform erfolgt dies am Kopf der Reaktionsvorrichtung. Die bei der Verbrennung (Oxidation) des Wasserstoffes freiwerdende Energie wird von dem Bett aus kohlenstoffhaltigem Material aufgenommen und gespeichert, wobei sich das Bett aufheizt.

Typischerweise wird das Bett aus kohlenstoffhaltigem Material bis zu einer maximalen Temperatur im Bereich von 1400 bis 1800 °C aufgeheizt. In einer Ausführungsform liegt die maximale Temperatur im Bereich von 1500-1700 °C, in einer anderen Ausführungsform liegt sie zwischen 1550 bis 1650 °C.

Das bei der Umsetzung von Wasserstoff mit Sauerstoff entstehende Wasser reagiert mit dem Kohlenstoff des kohlenstoffhaltigen Materials des Bettes zu Kohlenmonoxid und Wasserstoff, wobei dieses Gasgemisch auch als Synthesegas bezeichnet wird. Das Synthesegas wird am anderen Ende, vorzugsweise am Boden, der Reaktionsvorrichtung abgezogen.

Das Verhältnis von Wasserstoff zu Kohlenstoffmonoxid im Synthesegas kann über die Stöchiometrie zwischen den beiden Edukt-Gasen Sauerstoff und Wasserstoff eingestellt werden.

Obwohl die Synthesegasreaktion $C + H_2O \rightarrow CO + H_2$ endotherm verläuft, wird das kohlenstoffhaltige Bett aufgeheizt, da bei der Verbrennung deutlich mehr Energie freigesetzt wird als für die Synthesegasreaktion benötigt wird. Die exotherme Reaktionsenthalpie der Verbrennungsreaktion liegt deutlich über der endothermen Reaktionsenthalpie der Synthesegasreaktion mit einem Verhältnis -250/90 kJ/mol.

Die Einleitung des Sauerstoffs und Wasserstoffs wird gestoppt, wenn das Bett aus kohlenstoffhaltigem Material die maximale Temperatur erreicht hat. Die Pyrolyse des kohlenwasserstoffhaltigen Gases ist innerhalb eines Temperaturbereichs von 800 °C, vorzugsweise 900 °C und der maximalen Temperatur möglich.

Bei Erreichen der maximalen Temperatur wird der gasförmige Kohlenwasserstoffstrom bereitgestellt und in die Reaktionsvorrichtung eingebracht. Vorzugsweise erfolgt die Einleitung des gasförmigen Kohlenwasserstoffstroms am Ende der Reaktionsvorrichtung; vorzugsweise an dem Ende an dem das Synthesegas abgezogen wird, besonders bevorzugt am Boden der Reaktionsvorrichtung.

Prinzipiell können sämtliche Kohlenwasserstoffe in die Reaktionsvorrichtung eingeleitet und zersetzt werden, wobei jedoch leichte Kohlenwasserstoffe bevorzugt sind. Der Kohlenwasserstoff kann beispielsweise Methan, Ethan, Propan, Butan oder Gemische aus wenigstens zwei dieser Kohlenwasserstoffe sein. Vorzugsweise wird als gasförmiger Kohlenwasserstoffstrom Erdgas verwendet, dessen Methangehalt in Abhängigkeit von der Erdgaslagerstätte und der Art der Aufbereitung typischerweise zwischen 75 und 99 % der molaren Fraktion liegt. Besonders bevorzugt ist Methan.

Das kohlenwasserstoffhaltige Gas wird über das aufgeheizte Bett aus kohlenstoffhaltigem Material geleitet und durch Aufnahme der Energie aus dem Bett zu Wasserstoff und Kohlenstoff zersetzt. Diese endotherme Pyrolyse führt zur Abkühlung des Bettes aus kohlenstoffhaltigem Material.

Der entstehende Kohlenstoff scheidet sich auf den kohlenstoffhaltigen Partikeln des Betts ab. Der entstehende Wasserstoff wird am anderen Ende der Reaktionsvorrichtung, vorzugsweise am Kopf der Reaktionsvorrichtung, abgezogen.

Die pyrolytische Zersetzung des kohlenwasserstoffhaltigen Gases wird solange durchgeführt bis das Bett aus kohlenstoffhaltigem Material auf $\leq$ 900 °C, vorzugsweise $\leq$800 °C (Abkühltemperatur) abgekühlt ist. Wenn diese maximale Abkühltemperatur erreicht ist, wird die Einleitung und Zersetzung des kohlenwasserstoffhaltigen Gases gestoppt. In einer Ausführungsform erfolgt die pyrolytische Zersetzung des Kohlenwasserstoffs bei einer Temperatur von wenigstens 900 °C, bevorzugt bei wenigstens 950 °C, besonders bevorzugt bei wenigstens 1000 °C im kohlenstoffhaltigen Bett.

Bevorzugt wird das kohlenwasserstoffhaltige Gas nicht vorgewärmt. In diesem Fall umfasst das erfindungsgemäße Verfahren zusätzlich den Schritt des Wärmeaustauschs zwischen nicht-vorgewärmtem kohlenwasserstoffhaltigem Gas und Kohlenstoffpartikeln des Betts, der zu einer weiteren Temperaturabsenkung am Reaktoreintritt führt. In diesem Fall liegt ein axiales Temperaturprofil vor, welches am Reaktoreintritt unterhalb von 800 °C liegt. Durch die entzogene Reaktionsenthalpie wird sich beispielsweise eine Betttemperatur von ca. 800 °C einstellen. Das kohlenwasserstoffhaltige Gas kann beispielsweise Temperaturen von Raumtemperatur, insbesondere von 10-15 °C bis 500 °C aufweisen, so dass am Ende dieser Phase beispielsweise die eine Hälfte der Reaktionsvorrichtung bei einer Temperatur von 800 °C liegt und die andere Hälfte bei der Feedtemperatur des kohlenwasserstoffhaltigen Gases. Durch diese geringere Temperatur kann eine effizientere Entnahme des Kohlenstoffes erfolgen.

Wenn die Einleitung und Umsetzung des kohlenwasserstoffhaltigen Gases gestoppt wird, kann bei Bedarf ein Teil des kohlenstoffhaltigen Produkts, kohlenstoffhaltigen Materials des Bettes, aus der Reaktionsvorrichtung entnommen und abgeführt werden.

Dann beginnt der beschriebene Zyklus von neuem, d.h. es wird wieder Wasserstoff und ein sauerstoffhaltiges Gas zur Verbrennung des Wasserstoffs zwecks aufheizen des kohlenstoffhaltigen Bettes und der Herstellung von Synthesegas eingeleitet.

Dabei wird die Produktionsmenge pro Zyklus über die Kohlenstoffmasse bzw. die gespeicherte Energiemenge eingestellt.

Durch entsprechende Steuerung des Verfahrens kann Synthesegas mit einem gewünschten, einstellbaren molaren $H_2$/CO-Verhältnis erhalten werden. In einer Ausgestaltung des erfindungsgemäßen Verfahrens wird bei einer Temperatur von 1600 °C ein Verhältnis von Wasserstoff zu Kohlenmonoxid von etwa 4 erhalten und eine Kohlenstoffausbeute von ca. 50%.

In einer Ausführungsform erfolgen die Temperaturänderungen beim Aufheizen im kohlenstoffhaltigen Bett in der Reaktionsvorrichtung in Form einer wandernden Temperaturfront. Dies wird bewirkt durch die sehr guten Wärmeübertragungseigenschaften des Kohlenstoffs oder des kohlenstoffhaltigen Materials des Bettes; durch die axiale Dispersion innerhalb der Reaktionsvorrichtung(en), welche die Ausbildung eines radialen Profils stark schwächt; oder durch Reynolds-Zahlen größer als 200. Bei einer (teilweisen) kontinuierlichen Entnahme von Feststoff wird die Temperaturfront in einem definierten Bereich der Reaktionsvorrichtung gehalten.

Die Wandergeschwindigkeit der Temperaturfront in der Reaktionsvorrichtung wird über das L/D-Verhältnis (Längen/Durchmesser-Verhältnis) der Reaktionsvorrichtung und den Eduktstrom bestimmt.

Die Wandergeschwindigkeit der Temperaturfront w ergibt sich dabei aus dem Quotienten des Produkts der Gasdichte $\rho_g$, der Wärmekapazität des Gases $C_{p,g}$, der Strömungsgeschwindigkeit $v$ und des Produkts der Feststoffdichte $\rho_s$, der Wärmekapazität des Feststoffes $C_{p,s}$ und der Porosität des Festbettes mit

$$w = \frac{\rho_g C_{p,g} v}{[\rho_s C_{p,s}(1-\varepsilon)]} .$$

Das Verhältnis der Zykluszeiten der exotherm ablaufenden Umsetzung $t_{exo}$ und der endotherm ablaufenden pyrolytischen Zersetzung $t_{endo}$ ergibt sich aus der Energiebilanz dabei mit

$$\frac{t_{exo}}{t_{endo}} = \frac{\left[\rho_{g,in} v_{in} C_{p,g}\left(T_{g,in} - T_{g,out}\right) + \rho_{gm,in} v_{in} y_{A,in} X_A\left(\Delta H_{s,A}\right)\right]_{endo}}{\left[\rho_{g,in} v_{in} C_{p,g}\left(T_{g,in} - T_{g,out}\right) + \rho_{gm,in} v_{in} y_{A,in} X_A\left(-\Delta H_{a,A}\right)\right]_{exo}}$$

In einer weiteren Ausführungsform wird das Abkühlen des Kohlenstoffs oder des kohlenstoffhaltigen Materials des Bettes während der endothermen, pyrolytischen Zersetzung des kohlenwasserstoffhaltigen Gases in Form einer wandernden Temperaturfront bewirkt, die von der Reaktionskinetik und strömungsmechanischen Eigenschaften in der Reaktionsvorrichtung abhängig ist.

Aus diesem Grund werden die Temperaturprofile der Aufheiz- und Pyrolysephase (Abkühlphase) vorzugsweise in Strömungsumkehr gefahren.

Anschließend beginnt das Verfahren mit der Einleitung des Sauerstoffs und des Wasserstoffs wieder von vorne. Damit wird ein zyklischer, sich kontinuierlich wiederholender Gesamtprozess zur Verfügung gestellt, der die beschriebenen Schritte umfasst.

In einer Ausführungsform, insbesondere wenn nach der Verbrennung und Umsetzung des Wasserstoffs zu Synthesegas noch Wasser in der Reaktionsvorrichtung vorhanden ist, kann in einem zusätzlichen Schritt zwischen dem Aufheizen und dem Abkühlen des kohlenstoffhaltiges Material enthaltenden Bettes (Pyrolysephase) die Reaktionsvorrichtung mit einem gasförmigen Spül-Strom durchströmt werden, um Wasserrückstände aus der Reaktionsvorrichtung zu entfernen, die eventuell noch in der Reaktionsvorrichtung vorhanden sind. Vorzugsweise besteht der gasförmige Spül-Strom aus Wasserstoff. Vorzugsweise erfolgt das Durchströmen der Reaktionsvorrichtung von dem Ende an dem der Edukt-Feed "$H_2/O_2$" eingeleitet wird, zum anderen Ende an dem auch das Synthesegas ausgeleitet wird; besonders bevorzugt vom Kopf in Richtung Boden der Reaktionsvorrichtung.

In einer weiteren Ausführungsform, insbesondere wenn die Temperatur des kohlenstoffhaltigen Bettes nach Beenden der Einleitung des kohlenwasserstoffhaltigen Gases und der Pyrolyse noch nicht die gewünschte untere Temperatur erreicht hat, kann in einem zusätzlichen Schritt nach Beenden der Pyrolyse und vor dem erneuten Aufheizen des kohlenstoffhaltigen Bettes die Reaktionsvorrichtung mit einem gasförmigen Spül-Strom gespült werden und damit weiter abgekühlt werden. Vorzugsweise handelt es sich bei dem gasförmigen Spül-Strom um Wasserstoff und/oder einen Kohlenwasserstoff. Vorzugsweise erfolgt das Durchströmen der Reaktionsvorrichtung von dem Ende an dem der Edukt-Feed "Kohlenwasserstoff" eingeleitet wird, zum anderen Ende an dem auch der Wasserstoff ausgeleitet wird; besonders bevorzugt vom Boden in Richtung Kopf der Reaktionsvorrichtung.

Die Spülströme, bzw. Spülgase, können als Recycle außerhalb oder innerhalb der Reaktionsvorrichtung den entsprechenden Edukt-Feeds (Kohlenwasserstoff bzw. $H_2/O_2$) zugeführt werden. Handelt es sich bei dem Spülgas um Wasserstoff kann er beispielsweise außerhalb der Reaktionsvorrichtung dem in die Reaktionsvorrichtung einzuleitenden Wasserstoff, der mit dem gasförmigen sauerstoffhaltigen Oxidationsmittel gemischt werden soll, zugeführt werden. Handelt es sich bei dem Spülgas um einen Kohlenwasserstoff kann er beispielsweise außerhalb der Reaktionsvorrichtung dem in die Reaktionsvorrichtung zwecks Pyrolyse einzuleitenden Kohlenwasserstoff zugeführt werden. So wird ein Stoffkreislauf geschaffen, der eine optimale Ausnutzung und Verwertung der eingesetzten Stoff-Ströme gewährleistet.

Typischerweise wird das erfindungsgemäße Verfahren bei Atmosphärendruck bis zu einem Druck von 50 bar durchgeführt, in einer anderen Ausführungsform auch bis 70 bar. Vorteilhaft wird das Verfahren bei Atmosphärendruck bis zu einem Druck von 30 bar durchgeführt, bevorzugt bei Atmosphärendruck bis zu einem Druck von 20 bar, in einer anderen bevorzugten Ausführungsform bei Atmosphärendruck bis zu einem Druck von 10 bar. Ein hoher Druck in der Pyrolysestufe ist sowohl mit vorgelagerten als auch mit nachgeschalteten Stufen kompatibel. Der Druck in Erdgasleitungen beträgt üblicherweise 50 bar.

Zur Erhöhung der Kapazitäten und verbesserter Steuerung des Verfahrens können zwei oder mehr Reaktionsvorrichtungen miteinander verbunden werden, wobei ein Teil des Wasserstoffs, der bei der Pyrolyse des Kohlenwasserstoffs in einer Reaktionsvorrichtung entsteht, direkt für die Synthesegasherstellung in der anderen Reaktionsvorrichtung weiterverwendet wird.

Dafür werden wenigstens zwei Reaktionsvorrichtungen, die jeweils ein kohlenstoffhaltiges Bett der oben beschriebenen Art aufweisen, verwendet, die über wenigstens eine Verbindung zum Durchleiten des Wasserstoffs miteinander verbunden sind.

In einer Ausgestaltung des erfindungsgemäßen Verfahrens werden mindestens zwei Reaktionsvorrichtungen zur Herstellung von Synthesegas während der Aufheizphase und zur Herstellung von Kohlenstoff und Wasserstoff während der Abkühlphase des Bettes aus kohlenstoffhaltigem Material verwendet. Dabei erfolgt in einer Vorrichtung während der Aufheizphase die Herstellung von Synthesegas und parallel in der anderen Vorrichtung während der Abkühlphase die Herstellung von Kohlenstoff und Wasserstoff und die Vorrichtungen werden antizyklisch zueinander betrieben. Die mindestens zwei Reaktionsvorrichtungen sind mittels wenigstens einer Verbindungsleitung miteinander verbunden.

Während beispielsweise in der ersten Reaktionsvorrichtung die pyrolytische Zersetzung des Kohlenwasserstoffs stattfindet unter gleichzeitiger Abkühlung des kohlenstoffhaltigen Betts, kann zumindest ein Teil des entstehenden Wasserstoffs über eine Verbindungsleitung dem Edukt-Feed ($H_2/O_2$) der zweiten Reaktionsvorrichtung zugeführt werden, um mit dem sauerstoffhaltigen Gas umgesetzt zu werden und für die dort stattfindende Synthesegaserzeugung genutzt zu werden. Bei der Synthesegaserzeugung in der zweiten Reaktionsvorrichtung heizt sich das dort vorhandene kohlenstoffhaltige Bett auf, so dass anschließend in dieser zweiten Reaktionsvorrichtung eine nächste Pyrolyse von Kohlenwasserstoffen durchgeführt werden kann. Der dabei entstehende Wasserstoff wird anschließend zumindest teilweise zurück in die erste Reaktionsvorrichtung geführt, um dort den Wasserstoff für eine Aufheizphase bereitzustellen damit dort eine nächste Synthesegaserzeugung stattfinden kann. Die Reaktionsschritte finden somit alternierend statt. Mit einem derartigen Verfahren lässt sich eine kontinuierliche und gleichzeitige Produktion der gewünschten Produkte Synthesegas, Wasserstoff und Kohlenstoff erzielen.

Ferner offenbart ist eine nicht erfindungsgemäße Vorrichtung zur Herstellung von Wasserstoff, Kohlenmonoxid und einem kohlenstoffhaltigen Produkt gemäß dem vorstehend beschriebenen Verfahren.

Die nicht erfindungsgemäße Vorrichtung für das beschriebene Verfahren zur Herstellung von Wasserstoff Kohlenstoffmonoxid und einem kohlenstoffhaltigen Produkt umfasst in einer Ausführungsform

(A) eine Reaktionsvorrichtung umfassend ein Bett aus kohlenstoffhaltigem Material
(B) ein erstes Mittel zum Einleiten und/oder Ausleiten von Fluiden an einem Ende der Reaktionsvorrichtung und
(C) ein zweites Mittel zum Einleiten und/oder Ausleiten von Fluiden am anderen Ende der Reaktionsvorrichtung.

Die nicht erfindungsgemäße Reaktionsvorrichtung kann neben dem Bett aus kohlenstoffhaltigem Material ggf. auch andere Elemente wie Zu- und Ableitungen, Brenner, Quench usw. aufweisen.

In einer Ausführungsform ist die nicht erfindungsgemäße Reaktionsvorrichtung als senkrechter Schacht ausgestaltet

In einer bevorzugten Ausführungsform weist die nicht erfindungsgemäße Reaktionsvorrichtung einen zylindrischen Querschnitt auf.

Bei den Mitteln gemäß (B) und (C) handelt es sich vorzugsweiseweise um eine Leitung oder um wenigstens zwei Leitungen, die geeignet sind die Edukt- und Produktströme zu- oder abzuleiten.

In einer Ausführungsform ist das erste Mittel gemäß (B) insbesondere zum Einleiten und/oder Ausleiten von Sauerstoff, Wasserstoff und/oder Kohlenwasserstoffen geeignet und das zweite Mittel gemäß (C) ist dabei zum Einleiten und/oder Ausleiten von Wasserstoff, Kohlenmonoxid und/oder Kohlenwasserstoffen geeignet.

In einer alternativen nicht erfindungsgemäßen Vorrichtungsform sind mindestens zwei Reaktionsvorrichtungen der oben beschriebenen Art miteinander gekoppelt, die über wenigstens eine Verbindung zum Durchleiten des Wasserstoffs miteinander verbunden sind.

Alle im Zusammenhang mit dem erfindungsgemäßen Verfahren beschriebenen Ausführungsformen gelten analog für die nicht erfindungsgemäße Vorrichtung und werden daher an dieser Stelle nicht wiederholt.

Die nicht erfindungsgemäße Vorrichtung eignet sich besonders zum Durchführen des erfindungsgemäßen Verfahrens.

Im Folgenden wird die Erfindung anhand von Zeichnungen erläutert. Diese Erläuterungen sind lediglich beispielhaft und schränken den allgemeinen Erfindungsgedanken nicht ein.

In den Zeichnungen zeigt:

Figur 1 das Prinzip der Verfahrensschritte zur Durchführung des erfindungsgemäßen Verfahrens

Figur 2 das Prinzip zur Durchführung des erfindungsgemäßen Verfahrens, wenn mindestens zwei Reaktionsvorrichtungen miteinander gekoppelt sind.

Fig. 1 zeigt schematisch die Stufen 1 bis 5 zur Durchführung des erfindungsgemäßen Verfahrens in einer Reaktionsvorrichtung (R0), ausgestattet mit einem kohlenstoffhaltigen Bett (1), einem Mittel (2) am Kopf der Reaktionsvorrichtung (R0) und einem zweiten Mittel (3) am Boden der Reaktionsvorrichtung (R0), die zum Ein- und Ausleiten der im Verfahren eingesetzten Gase bzw. Stoff-Ströme genutzt werden.

In Stufe 1 werden über Mittel (2) Sauerstoff und Wasserstoff am Kopf der Reaktionsvorrichtung (R0) in den Innenbereich der Reaktionsvorrichtung (R0) eingeleitet und verbrannt. Der Sauerstoff reagiert mit dem Wasserstoff zu Wasser unter Wärmefreisetzung. Gleichzeitig heizt sich das kohlenstoffhaltige Bett (1) durch die bei der exotherm ablaufenden Reaktion entstehende thermische Energie auf eine Temperatur zwischen 1400 °C und 1800 °C auf. Das dabei entstehende Wasser reagiert mit dem Kohlenstoff des kohlenstoffhaltigen Betts (1), wobei Synthesegas, bestehend aus Kohlenstoffmonoxid und Wasserstoff, entsteht. Das Synthesegas als Produkt wird über Mittel (3) am Boden der Reaktionsvorrichtung (R0) abgezogen. Die in der Reaktionsvorrichtung (R0) gezeigte gestrichelte Temperaturfrontlinie (9) deutet schematisch den kühlen Zustand des kohlenstoffhaltigen Betts (1) an, wobei sich die Temperaturfront (9) zu Beginn der Reaktion im oberen Bereich der Reaktionsvorrichtung (R0) befindet, da sich das Bett noch nicht aufgeheizt hat. In der Aufheizphase des kohlenstoffhaltigen Betts verschiebt sich die Temperaturfront in den unteren Bereich der Reaktionsvorrichtung (R0), was mit der durchgezogenen Temperaturfrontlinie (10) im aufgeheizten Zustand schematisch dargestellt wird.

In Stufe 2 wird die Zufuhr von Sauerstoff und Wasserstoff in die Reaktionsvorrichtung (R0) beim Erreichen der maximalen Plateautemperatur, die im Bereich von 1400 bis 1800 °C im kohlenstoffhaltigen Bett (1) liegt, gestoppt. Im Fall, dass die Reaktionsvorrichtung (R0) noch Wasserrückstände aufweist, wird Wasserstoff zum Spülen der Reaktionsvorrichtung (R0) über Mittel (2) am Kopf der Reaktionsvorrichtung (R0) eingeleitet und über Mittel (3) am Boden der Reaktionsvorrichtung (R0) wieder ausgeleitet. Damit lassen sich die Wasserrückstände aus dem Reaktionssystem entfernen. Die durchgezogene Temperaturfrontlinie (10) zeigt, dass das kohlenstoffhaltige Bett aufgeheizt bleibt.

Anschließend wird in Stufe 3 Kohlenwasserstoff über Mittel (3) am Boden der Reaktionsvorrichtung (R0) eingeleitet. Mittels der im kohlenstoffhaltigen Bett (1) gespeicherten thermischen Energie wird der Kohlenwasserstoff zu Wasserstoff und Kohlenstoff pyrolysiert, wobei sich das kohlenstoffhaltige Bett (1) auf maximal 900 °C abkühlt. Der neu gebildete Wasserstoff wird als Produkt über Mittel (2) abgezogen, während sich der entstandene Kohlenstoff auf dem kohlenstoffhaltigen Bett (1) als kohlenstoffhaltiges Produkt niederschlägt. Die Menge an kohlenstoffhaltigem Produkt pro Zyklus wird dabei über die Kohlenstoffmasse bzw. die gespeicherte Energiemenge eingestellt. Durch das Abkühlen des kohlenstoffhaltigen Betts (1) verschiebt sich die durchgezogene Temperaturfrontlinie (10) in den oberen Bereich der Reaktionsvorrichtung (R0). Die gestrichelte Temperaturfrontlinie (9) deutet die abgekühlte Temperaturfront an.

In Stufe 4 wird bei einer kontinuierlichen Entnahme des kohlenstoffhaltigen Betts (1) die Temperaturfront in einem definierten Bereich der Reaktionsvorrichtung (R0) gehalten. Dies lässt sich mit der Temperaturprofillinie verdeutlichen, wobei die Temperaturfront hier beispielhaft bis zur Mitte der Reaktionsvorrichtung (R0) dargestellt ist. Zur weiteren Temperaturabsenkung wird die Reaktionsvorrichtung (R0) mit einem Kohlenwasserstoff oder Wasserstoff gespült, indem das entsprechende Gas über Mittel (3) am Boden der Reaktionsvorrichtung (R0) eingeleitet und über Mittel (2) am Kopf der Reaktionsvorrichtung (R0) wieder ausgeleitet wird.

In Stufe 5 wird ein Teil des kohlenstoffhaltigen Betts (1) aus der Reaktionsvorrichtung (R0) entnommen und neues kohlenstoffhaltiges Material wird eingebracht. Damit befindet sich die Reaktionsvorrichtung (R0) wieder im Ausgangszustand und das Verfahren kann von vorne beginnen. Somit lässt sich das Verfahren zyklisch und kontinuierlich durchführen.

In Fig. 2 wird eine Ausführungsform zur Durchführung des erfindungsgemäßen Verfahrens mittels zwei Reaktionsvorrichtungen (R1) und (R2), die miteinander über Verbindung (8) verbunden sind und je ein kohlenstoffhaltiges Bett aufweisen - (1a) und (1b), dargestellt. Dabei wird in Phase 1 über Mittel (5) am Boden der Reaktionsvorrichtung

(R1) Kohlenwasserstoff eingeleitet und pyrolytisch bei einer Temperatur von ≥ 900 °C, üblicherweise ausgehend von einer Temperatur 1400 °C bis 1800 °C, zersetzt, wobei Kohlenstoff und Wasserstoff entstehen. Der Kohlenstoff scheidet sich auf dem kohlenstoffhaltigen Bett (1a) ab, während ein Teil des Wasserstoffs über Mittel (4) am Kopf der Reaktionsvorrichtung (R1) ausgeleitet wird und ein anderer Teil über die Verbindung (8) in die zweite Reaktionsvorrichtung (R2) geleitet wird. Dieser Wasserstoff wird dabei dem Sauerstoff und Wasserstoff zugeführt, die über Mittel (6) am Kopf der Reaktionsvorrichtung (R2) eingeleitet werden. Der aus der Reaktionsvorrichtung (R1) zugeführte Wasserstoff wird überstöchiometrisch am Kopf von der Reaktionsvorrichtung (R2) mit dem Sauerstoff und dem anderen Wasserstoff verbrannt, wobei sich das kohlenstoffhaltige Bett (1b) auf eine Temperatur von 1400 °C bis 1800 °C aufheizt. Dabei kommt es zur Bildung von Wasser, wobei dieses Wasser mit dem Kohlenstoff des kohlenstoffhaltigen Betts (1b) zu Synthesegas weiterreagiert. Das Synthesegas wird anschließend über Mittel (7) am Boden der Reaktionsvorrichtung (R2) abgezogen. Das kohlenstoffhaltige Bett (1a) der Reaktionsvorrichtung (R1) kühlt sich gleichzeitig während der Pyrolyse ab.

Wenn die maximale Plateautemperatur von 1400 bis 1800 °C in der Reaktionsvorrichtung (R2) erreicht wird, wird das Einleiten der Edukt-Gase gestoppt und der gesamte Prozess wird umgekehrt.

In Phase 2 wird über Mittel (7) am Boden der Reaktionsvorrichtung (R2) Kohlenwasserstoff eingeleitet, der dann durch die thermische Energie im kohlestoffhaltigen Bett (1b) pyrolytisch zu Wasserstoff und Kohlenstoff zersetzt wird. Der Pyrolysekohlenstoff scheidet sich auf dem kohlenstoffhaltigen Bett (1b) ab, während ein Teil des Wasserstoffs über Mittel (6) am Kopf der Reaktionsvorrichtung (R2) ausgeleitet wird. Der andere Teil des Wasserstoffs wird über Verbindung (8) in die Reaktionsvorrichtung (R1) geleitet, wobei gleichzeitig über Mittel (4) am Kopf der Reaktionsvorrichtung (R1) Sauerstoff und Wasserstoff eingeleitet werden und diese Gase zusammen unter Bildung von Wasser verbrannt werden. Durch diese Verbrennungsreaktion heizt sich wiederum das Kohlenstoffbett (1a) in der Reaktionsvorrichtung (R1) auf. Das Wasser reagiert mit dem Kohlenstoff des kohlenstoffhaltigen Betts (1a) zu Synthesegas, das über Mittel (5) am Boden der Reaktionsvorrichtung (R1) abgezogen wird. Das kohlenstoffhaltige Bett (1b) der Reaktionsvorrichtung (R2) kühlt sich gleichzeitig während der Pyrolyse ab.

Eine teilweise Entnahme des kohlenstoffhaltigen Produkts aus dem kohlenstoffhaltigen Bett kann sowohl zyklisch als auch kontinuierlich erfolgen. Das Durchleiten von Wasserstoff oder Kohlenwasserstoffen zum Spülen oder Kühlen der Reaktionsvorrichtung und/oder des kohlenstoffhaltigen Bettes wird bevorzugt zwischen den einzelnen Schritten durchgeführt.

Anschließend beginnt wieder Phase 1 und das Verfahren wird alternierend bzw. zyklisch fortgeführt. Damit ist es möglich kontinuierlich Wasserstoff, Kohlenstoffmonoxid und ein kohlenstoffhaltiges Produkt gleichzeitig herzustellen und aus dem System auszuleiten.

*Bezugszeichenliste:*

| | |
|---|---|
| R0 | Reaktionsvorrichtung |
| R1 | Reaktionsvorrichtung |
| R2 | Reaktionsvorrichtung |
| 1 | kohlenstoffhaltiges Bett |
| 1a | kohlenstoffhaltiges Bett |
| 1b | kohlenstoffhaltiges Bett |
| 2 | Mittel zum Ein- und/oder Ausleiten |
| 3 | Mittel zum Ein- und/oder Ausleiten |
| 4 | Mittel zum Ein- und/oder Ausleiten |
| 5 | Mittel zum Ein- und/oder Ausleiten |
| 6 | Mittel zum Ein- und/oder Ausleiten |
| 7 | Mittel zum Ein- und/oder Ausleiten |
| 8 | Verbindung |
| 9 | gestrichelte Temperaturfrontlinie |
| 10 | durchgezogene Temperaturfrontlinie |

## Patentansprüche

1. Ein Verfahren zur Herstellung von molekularem Wasserstoff ($H_2$), Kohlenmonoxid und einem kohlenstoffhaltigen Produkt, wobei das Verfahren folgende Schritte umfasst:

(a) Bereitstellen von molekularem Wasserstoff ($H_2$) und molekularem Sauerstoff ($O_2$),
(b) Aufheizen eines Bettes aus kohlenstoffhaltigem Material auf eine Temperatur von > 800 °C durch die Umsetzung des molekularen Wasserstoffs ($H_2$) mit dem molekularen Sauerstoff ($O_2$),
wobei Schritte (a) und (b) in derselben Reaktionsvorrichtung (R0) ablaufen,
(c) Abziehen des entstehenden Synthesegases, welches molekularen Wasserstoff ($H_2$) und Kohlenmonoxid enthält,
(d) Beendigung der Bereitstellung von molekularem Wasserstoff ($H_2$) und molekularem Sauerstoff ($O_2$) spätestens bei Erreichen einer Temperatur von 1800 °C des Bettes aus kohlenstoffhaltigem Material,
(e) Bereitstellen eines gasförmigen Kohlenwasserstoffstromes und Zersetzung der Kohlenwasserstoffe in Gegenwart des Bettes aus kohlenstoffhaltigem Material in Kohlenstoff und molekularen Wasserstoff ($H_2$), wobei die Temperatur des Bettes aus kohlenstoffhaltigem Material abnimmt,
(f) Abziehen des molekularen Wasserstoffs ($H_2$),
(g) Beendigung der Bereitstellung eines gasförmigen Kohlenwasserstoffstromes spätestens bei Erreichen einer Temperatur von ≤ 900 °C des Bettes aus kohlenstoffhaltigem Material, und
(h) Abziehen zumindest eines Teils des kohlenstoffhaltigen Materials des Bettes, wobei das kohlenstoffhaltige Material einen Niederschlag aufweist, der das kohlenstoffhaltige Produkt umfasst.

**2.** Das Verfahren gemäß Anspruch 1, wobei

- die Reaktionsvorrichtung (R0) mit einer weiteren Reaktionsvorrichtung verbunden ist, welche ebenfalls ein Bett aus kohlenstoffhaltigem Material enthält, und
- während in der Reaktionsvorrichtung (R0) die Schritte (e) bis (h) durchgeführt werden, werden in der weiteren Reaktionsvorrichtung die Schritte (a) bis (d) durchgeführt, und
- der in der Reaktionsvorrichtung (R0) entstehende molekulare Wasserstoff ($H_2$) mindestens teilweise der weiteren Reaktionsvorrichtung zugeführt wird und mit molekularem Sauerstoff ($O_2$) umgesetzt wird, und
- bei Erreichen der jeweiligen Temperaturen die Verfahrensführung umgedreht wird und während in der Reaktionsvorrichtung (R0) die Schritte (a) bis (d) durchgeführt werden, in der weiteren Reaktionsvorrichtung die Schritte (e) bis (h) durchgeführt werden.

**3.** Das Verfahren gemäß Anspruch 1 oder 2, wobei molekularer Wasserstoff ($H_2$) und molekularer Sauerstoff ($O_2$) in die Reaktionsvorrichtung (R0) und/oder die weitere Reaktionsvorrichtung eingeleitet und verbrannt werden, vorzugsweise am jeweiligen Ende der Reaktionsvorrichtung (R0) und/oder der weiteren Reaktionsvorrichtung, an dem sie eingeleitet werden.

**4.** Das Verfahren gemäß einem der vorstehenden Ansprüche, wobei das jeweilige Bett aus kohlenstoffhaltigem Material in der Reaktionsvorrichtung (R0) und/oder der weiteren Reaktionsvorrichtung abwechselnd auf eine Temperatur von > 900 °C aufgeheizt und spätestens bei Erreichen einer Temperatur von 1800 °C abgekühlt wird auf ≤ 900 °C.

**5.** Das Verfahren gemäß einem der vorstehenden Ansprüche, wobei das jeweilige Bett aus kohlenstoffhaltigem Material in der Reaktionsvorrichtung (R0) und/oder der weiteren Reaktionsvorrichtung auf eine Temperatur im Bereich von 1400 °C bis 1800 °C aufgeheizt wird.

**6.** Das Verfahren gemäß einem der vorstehenden Ansprüche, wobei das jeweilige Bett aus kohlenstoffhaltigem Material in der Reaktionsvorrichtung (R0) und/oder der weiteren Reaktionsvorrichtung auf eine Temperatur von ≤ 900 °C abgekühlt wird.

**7.** Das Verfahren gemäß einem der vorstehenden Ansprüche, wobei der gasförmige Kohlenwasserstoffstrom Erdgas oder Methan ist.

**8.** Das Verfahren gemäß einem der vorstehenden Ansprüche, wobei es sich bei dem jeweiligen Bett aus kohlenstoffhaltigem Material in der Reaktionsvorrichtung (R0) und/oder der weiteren Reaktionsvorrichtung um ein Festbett handelt.

**9.** Das Verfahren gemäß einem der vorstehenden Ansprüche, wobei das Bereitstellen von molekularem Wasserstoff ($H_2$) und molekularem Sauerstoff ($O_2$) und des gasförmigen Kohlenwasserstoffstromes in Strömungsumkehr gefahren werden.

**10.** Das Verfahren gemäß einem der vorstehenden Ansprüche, wobei die Schritte (a) bis (h) als Gesamtprozess zyklisch

und kontinuierlich wiederholt werden.

**11.** Das Verfahren nach einem der vorstehenden Ansprüche, wobei in einem weiteren Schritt (d1), zwischen den Schritten (d) und (e), ein gasförmiger Strom als Mittel zum Spülen, bevorzugt bestehend aus molekularem Wasserstoff ($H_2$), durch die Reaktionsvorrichtung (R0) und/oder die weitere Reaktionsvorrichtung geleitet wird.

**12.** Das Verfahren nach einem der vorstehenden Ansprüche, wobei in einem weiteren Schritt (g1), zwischen den Schritten (g) und (h), ein gasförmiger Strom als Spülmittel, bevorzugt bestehend aus molekularem Wasserstoff ($H_2$) oder Methan, durch die Reaktionsvorrichtung (R0) und/oder die weitere Reaktionsvorrichtung geleitet wird.

**13.** Das Verfahren nach einem der vorstehenden Ansprüche, wobei bei Aufheizen des Bettes aus kohlenstoffhaltigem Material auf eine Temperatur von 1600 °C ein Verhältnis von $H_2$/CO von etwa 4 und eine Kohlenstoffausbeute von etwa 50 % erreicht werden.

## Claims

**1.** A method for producing molecular hydrogen ($H_2$), carbon monoxide, and a carbonaceous product, wherein the method comprises the following steps:

(a) providing molecular hydrogen ($H_2$) and molecular oxygen ($O_2$),
(b) heating a bed of carbonaceous material to a temperature of > 800 °C by reacting the molecular hydrogen ($H_2$) with the molecular oxygen ($O_2$),
wherein steps (a) and (b) take place in the same reaction device (R0),
(c) withdrawing the resulting synthesis gas, which contains molecular hydrogen ($H_2$) and carbon monoxide,
(d) ending the provision of molecular hydrogen ($H_2$) and molecular oxygen ($O_2$) when the bed of carbonaceous material reaches a temperature of 1800°C, at the latest,
(e) providing a gaseous hydrocarbon stream and decomposing the hydrocarbons in the presence of the bed of carbonaceous material into carbon and molecular hydrogen ($H_2$), wherein the temperature of the bed of carbonaceous material decreases,
(f) withdrawing the molecular hydrogen ($H_2$),
(g) ending the provision of a gaseous hydrocarbon stream when the bed of carbonaceous material reaches a temperature of ≤ 900°C, at the latest, and
(h) withdrawing at least a portion of the carbonaceous material from the bed, wherein the carbonaceous material includes a precipitate that comprises the carbonaceous product.

**2.** The method according to claim 1, wherein

the reaction device (R0) is connected to a further reaction device which also contains a bed of carbonaceous material, and
while steps (e) to (h) are carried out in the reaction device (R0), steps (a) to (d) are carried out in the further reaction device, and
the molecular hydrogen ($H_2$) formed in the reaction device (R0) is at least partially fed to the further reaction device and is reacted with molecular oxygen ($O_2$), and
when the respective temperatures are reached, the method is reversed and while steps (a) to (d) are carried out in the reaction device (R0), steps (e) to (h) are carried out in the further reaction device.

**3.** The method according to claim 1 or 2, wherein molecular hydrogen ($H_2$) and molecular oxygen ($O_2$) are introduced into the reaction device (R0) and/or the further reaction device and combusted, preferably at the respective end of the reaction device (R0) and/or the further reaction device at which they are introduced.

**4.** The method according to any one of the preceding claims, wherein the respective bed of carbonaceous material in the reaction device (R0) and/or the further reaction device is alternately heated to a temperature of > 900°C and cooled to ≤ 900°C when a temperature of 1800°C is reached, at the latest.

**5.** The method according to any one of the preceding claims, wherein the respective bed of carbonaceous material in the reaction device (R0) and/or the further reaction device is heated to a temperature in the range from 1400°C to 1800°C.

6. The method according to any one of the preceding claims, wherein the respective bed of carbonaceous material in the reaction device (R0) and/or the further reaction device is cooled to a temperature of ≤ 900°C.

7. The method according to any one of the preceding claims, wherein the gaseous hydrocarbon stream is natural gas or methane.

8. The method according to any one of the preceding claims, wherein the respective bed of carbonaceous material in the reaction device (R0) and/or the further reaction device is a fixed bed.

9. The method according to any one of the preceding claims, wherein the provision of molecular hydrogen ($H_2$) and molecular oxygen ($O_2$) and the gaseous hydrocarbon stream are driven in flow reversal.

10. The method according to any one of the preceding claims, wherein steps (a) to (h) are repeated cyclically and continuously as an overall process.

11. The method according to any one of the preceding claims, wherein in a further step (d1), between steps (d) and (e), a gaseous stream as a means for flushing, preferably consisting of molecular hydrogen ($H_2$), is passed through the reaction device (R0) and/or the further reaction device.

12. The method according to any one of the preceding claims, wherein in a further step (g1), between steps (g) and (h), a gaseous stream as a flushing means, preferably consisting of molecular hydrogen ($H_2$) or methane, is passed through the reaction device (R0) and/or the further reaction device.

13. The method according to any one of the preceding claims, wherein upon heating the bed of carbonaceous material to a temperature of 1600°C, a ratio of $H_2$/CO of approximately 4 and a carbon yield of approximately 50% are achieved.

## Revendications

1. Procédé de production d'hydrogène moléculaire ($H_2$), de monoxyde de carbone et d'un produit carboné, dans lequel le procédé comprend les étapes de :

(a) apport d'hydrogène moléculaire ($H_2$) et d'oxygène moléculaire ($O_2$),
(b) chauffage d'un lit de matériau carboné à une température > 800 °C en faisant réagir l'hydrogène moléculaire ($H_2$) avec l'oxygène moléculaire ($O_2$),
dans lequel les étapes (a) et (b) ont lieu dans le même dispositif de réaction (R0),
(c) extraction du gaz de synthèse résultant, qui contient de l'hydrogène moléculaire ($H_2$) et du monoxyde de carbone,
(d) arrêt de l'apport d'hydrogène moléculaire ($H_2$) et d'oxygène moléculaire ($O_2$) au plus tard lorsque le lit de matériau carboné atteint une température de 1 800 °C,
(e) apport d'un courant d'hydrocarbures gazeux et décomposition des hydrocarbures en présence du lit de matériau carboné en carbone et en hydrogène moléculaire ($H_2$), dans lequel la température du lit en matériau carboné diminue,
(f) extraction de l'hydrogène moléculaire ($H_2$),
(g) arrêt de l'apport d'un courant d'hydrocarbures gazeux au plus tard lorsque le lit de matériau carboné atteint une température ≤ 900 °C, et
(h) extraction d'au moins une partie du matériau carboné du lit, dans lequel le matériau carboné a un précipité comprenant le produit carboné.

2. Procédé selon la revendication 1, dans lequel

le dispositif de réaction (R0) est relié à un autre dispositif de réaction qui contient également un lit de matériau carboné, et
tandis que les étapes (e) à (h) sont réalisées dans le dispositif de réaction (R0), les étapes (a) à (d) sont réalisées dans l'autre dispositif de réaction, et
au moins une partie de l'hydrogène moléculaire ($H_2$) formé dans le dispositif de réaction (R0) est amenée à l'autre dispositif de réaction et est mise à réagir avec de l'oxygène moléculaire ($O_2$), et
lorsque les températures respectives sont atteintes, la procédure est inversée et tandis que les étapes (a) à

(d) sont réalisées dans le dispositif de réaction (R0), les étapes (e) à (h) sont réalisées dans l'autre dispositif de réaction.

**3.** Procédé selon la revendication 1 ou 2, dans lequel l'hydrogène moléculaire ($H_2$) et l'oxygène moléculaire ($O_2$) sont introduits dans le dispositif de réaction (R0) et/ou dans l'autre dispositif de réaction et brûlés, de préférence à l'extrémité respective du dispositif de réaction (R0) et/ou de l'autre dispositif de réaction au niveau duquel ils sont introduits.

**4.** Procédé selon l'une des revendications précédentes, dans lequel le lit respectif de matériau carboné dans le dispositif de réaction (R0) et/ou dans l'autre dispositif de réaction est alternativement chauffé à une température > 900 °C et refroidi à une température ≤ 900 °C au plus tard lorsqu'une température de 1 800 °C est atteinte.

**5.** Procédé selon l'une des revendications précédentes, dans lequel le lit respectif de matériau carboné dans le dispositif de réaction (R0) et/ou dans l'autre dispositif de réaction est chauffé à une température dans la plage de 1 400 °C à 1 800 °C.

**6.** Procédé selon l'une des revendications précédentes, dans lequel le lit respectif de matériau carboné dans le dispositif de réaction (R0) et/ou dans l'autre dispositif de réaction est refroidi à une température ≤ 900 °C.

**7.** Procédé selon l'une des revendications précédentes, dans lequel le courant d'hydrocarbures gazeux est du gaz naturel ou du méthane.

**8.** Procédé selon l'une des revendications précédentes, dans lequel le lit respectif de matériau carboné dans le dispositif de réaction (R0) et/ou dans l'autre dispositif de réaction est un lit fixe.

**9.** Procédé selon l'une des revendications précédentes, dans lequel l'apport d'hydrogène moléculaire ($H_2$) et d'oxygène moléculaire ($O_2$) et le flux d'hydrocarbures gazeux sont conduits en inversion de flux.

**10.** Procédé selon l'une des revendications précédentes, dans lequel les étapes (a) à (h) sont répétées de manière cyclique et continue en tant que processus global.

**11.** Procédé selon l'une des revendications précédentes, dans lequel dans une étape supplémentaire (d1), entre les étapes (d) et (e), un courant gazeux est acheminé comme moyen de rinçage, de préférence constitué d'hydrogène moléculaire ($H_2$), à travers le dispositif de réaction (R0) et/ou l'autre dispositif de réaction.

**12.** Procédé selon l'une des revendications précédentes, dans lequel, dans une étape supplémentaire (g1), entre les étapes (g) et (h), un courant gazeux est acheminé comme détergent, de préférence constitué d'hydrogène moléculaire ($H_2$) ou de méthane, à travers le dispositif de réaction (R0) et/ou l'autre dispositif de réaction.

**13.** Procédé selon l'une des revendications précédentes, dans lequel le chauffage du lit de matériau carboné à une température de 1 600 °C permet d'obtenir un rapport $H_2$/CO d'environ 4 et un rendement en carbone d'environ 50 %.

Figur 1

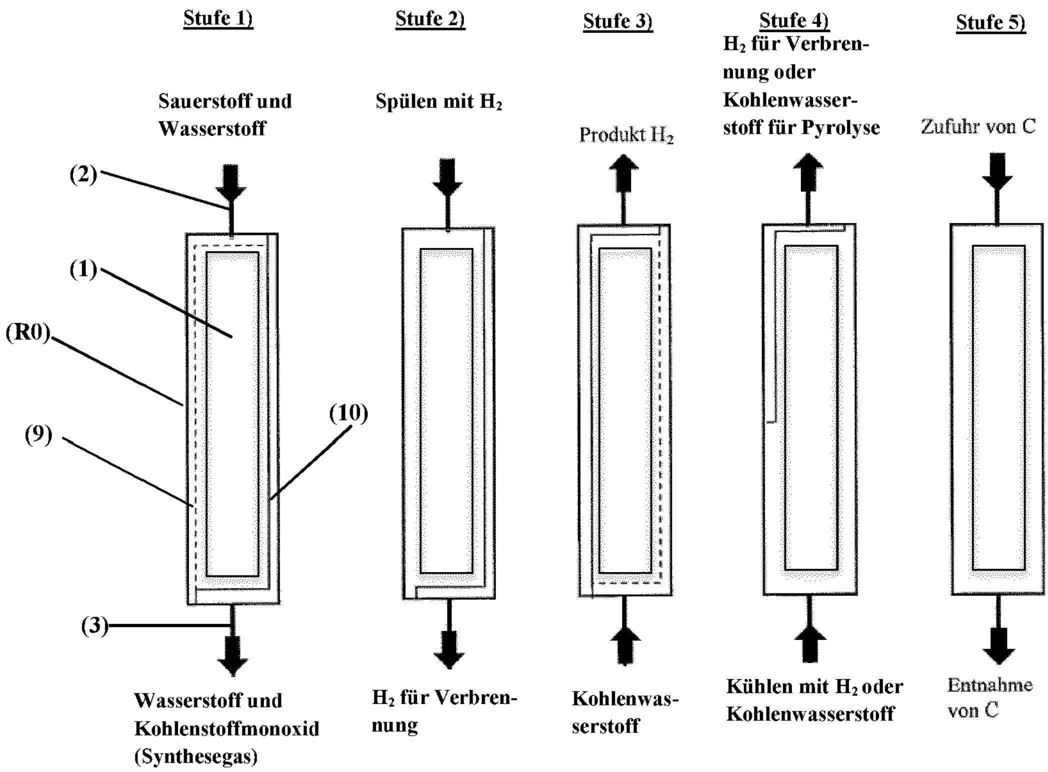
Stufe 1)
Sauerstoff und Wasserstoff
(2)
(1)
(R0)
(9)
(10)
(3)
Wasserstoff und Kohlenstoffmonoxid (Synthesegas)
Stufe 2)
Spülen mit $H_2$
$H_2$ für Verbrennung
Stufe 3)
Produkt $H_2$
Kohlenwasserstoff
Stufe 4)
$H_2$ für Verbrennung oder Kohlenwasserstoff für Pyrolyse
Kühlen mit $H_2$ oder Kohlenwasserstoff
Stufe 5)
Zufuhr von C
Entnahme von C

Figur 2

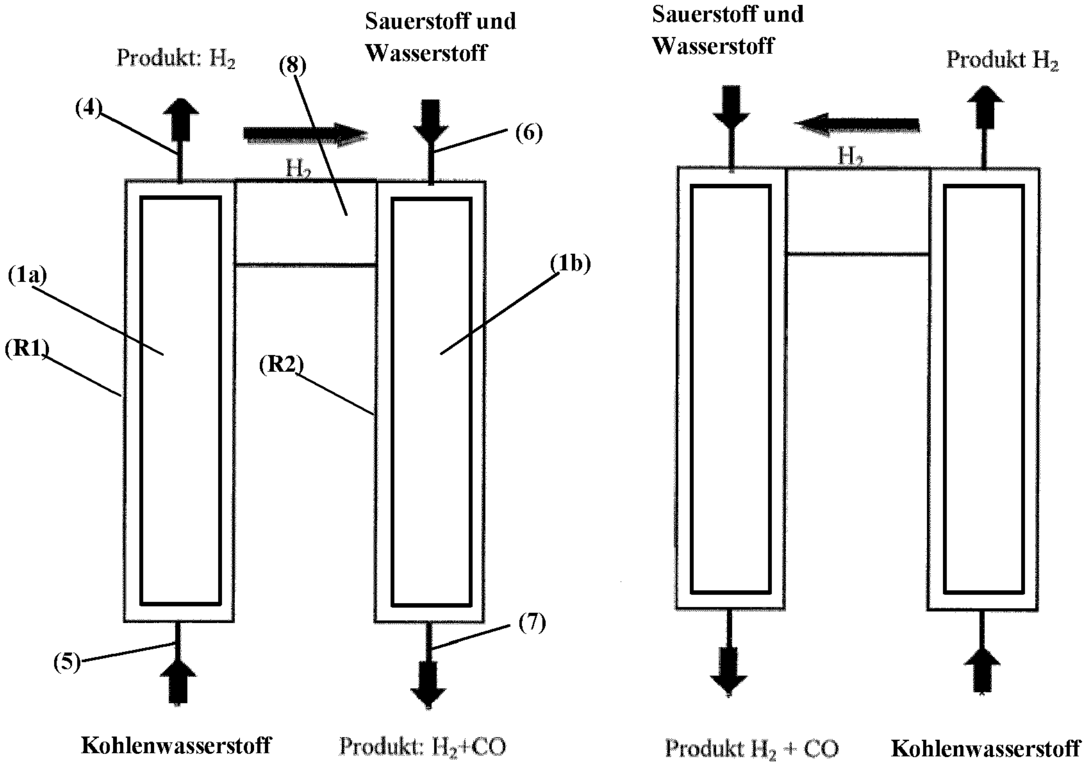
Produkt: $H_2$
(8)
Sauerstoff und
Wasserstoff
(4)
(6)
$H_2$
(1a)
(1b)
(R1)
(R2)
(5)
(7)
Kohlenwasserstoff
Produkt: $H_2$+CO
Sauerstoff und
Wasserstoff
Produkt $H_2$
$H_2$
Produkt $H_2$ + CO
Kohlenwasserstoff

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente


- US 20020007594 A1
- US 20070111051 A1
- US 5650132 A
- WO 2014097142 A1
- WO 2013004398 A2
- US 4240805 A
- US 20030235529 A
- US 2007003478 A
- US 2007033873 A